(19) **Europäisches Patentamt European Patent Office Office européen des brevets**

(11) **EP 4 675 611 A1**

(12) **EUROPEAN PATENT APPLICATION**

(43) Date of publication:
07.01.2026  Bulletin 2026/02

(21) Application number: 25158375.3

(22) Date of filing: 17.02.2025

(51) International Patent Classification (IPC):
*G10K 15/02* (2006.01)      *B60Q 5/00* (2006.01)
*G08G 1/16* (2006.01)       *G07C 5/02* (2006.01)

(52) Cooperative Patent Classification (CPC):
**G10K 15/02; B60Q 5/008; G08G 1/166;** G07C 5/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  05.03.2024  JP 2024033357

(71) Applicant: **TOYOTA JIDOSHA KABUSHIKI KAISHA**
**Toyota-shi, Aichi-Ken, 471-8571 (JP)**

(72) Inventor: **KODERA, Hiroaki**
**TOYOTA-SHI, AICHI-KEN, 471-8571 (JP)**

(74) Representative: **Cabinet Beau de Loménie**
**103, rue de Grenelle**
**75340 Paris Cedex 07 (FR)**

(54) **SOUND CONTROL SYSTEM AND BATTERY ELECTRIC VEHICLE**

(57)    A sound control system (1) that is applied to a battery electric vehicle (10) includes: a speaker (70) that is equipped in the battery electric vehicle (10); a sensor (11) that is configured to detect information about a peripheral environment of the battery electric vehicle (10); and a processing circuit (110). The processing circuit (110) is configured to recognize a target vehicle based on the information detected by the sensor (11), the target vehicle being at least one of other vehicles that travel in the periphery of the battery electric vehicle (10), is configured to generate an artificial sound related to the target vehicle, is configured to output the artificial sound from the speaker (70), and is configured to change the characteristic of the artificial sound depending on the relative speed of the target vehicle with respect to the battery electric vehicle (10).

FIG. 4

EP 4 675 611 A1

## Description

BACKGROUND OF THE INVENTION

1. Field of the Invention

The present disclosure relates to a sound control system and a battery electric vehicle.

2. Description of Related Art

There has been discussed a technology in which a battery electric vehicle generates a pseudo engine sound that simulates an engine sound of an engine vehicle including an internal combustion engine as a drive source. For example, Japanese Unexamined Patent Application Publication No. 2011-215437 discloses a sound control device that calculates the engine speed of a virtual engine based on the traveling information about the vehicle and the gear ratio of the virtual engine and that controls a pseudo engine sound (virtual engine sound) based on the calculated engine speed.

Since the pseudo engine sound is generated in the battery electric vehicle in this way, the driver of the battery electric vehicle can feel the driving state of the battery electric vehicle through the sound. This provides one element that gives a joyful feeling to the driver during driving.

SUMMARY OF THE INVENTION

As one element that gives a joyful feeling to the driver during driving, there is a speed feeling about an own vehicle that is driven. Particularly, the driver recognizes the speed feeling about the own vehicle from the relative speed of another vehicle in the periphery with respect to the own vehicle. On this occasion, the driver can know the relative speed of the other vehicle, by seeing the motion of the other vehicle or hearing the sound that is generated by the other vehicle.

However, in recent years, sounds that are generated by the other vehicle and that can be heard by the driver have decreased with the enhancement in the silence performance of the battery electric vehicle. Particularly, in the case where the other vehicle is a vehicle having a high silence performance, as exemplified by a battery electric vehicle (BEV) or a fuel cell electric vehicle (FCEV), sounds that can be heard by the driver further decrease. Therefore, it is difficult for the driver to know the relative speed of the other vehicle, and as a result, there is a concern that the speed feeling that is recognized by the driver is reduced.

The present disclosure provides a technology that makes it easy for the driver to know the relative speed of the other vehicle in the periphery with respect to the own vehicle and that makes it possible to increase the speed feeling that is recognized by the driver.

A first aspect of the present disclosure is a sound control system that is applied to a battery electric vehicle that uses an electric motor as a dynamic power device for traveling. The sound control system includes: a speaker that is equipped in the battery electric vehicle; a sensor is configured to detect information about a peripheral environment of the battery electric vehicle; and a processing circuit. The processing circuit is configured to recognize a target vehicle based on the information detected by the sensor, the target vehicle being at least one of other vehicles that travel in the periphery of the battery electric vehicle, is configured to generate an artificial sound related to the target vehicle, is configured to output the artificial sound from the speaker, and is configured to change the characteristic of the artificial sound depending on the relative speed of the target vehicle with respect to the battery electric vehicle.

In the sound control system according to the first aspect of the present disclosure, the target vehicle may be a vehicle that is configured to travel in front of the battery electric vehicle. The processing circuit may be configured to change the characteristic of the artificial sound depending on a virtual relative speed, after the battery electric vehicle has passed the target vehicle, the magnitude of the value of the virtual relative speed being larger than the magnitude of the value of the relative speed.

In the sound control system according to the first aspect of the present disclosure, the processing circuit may be configured to specify a visible range in front of the battery electric vehicle, the visible range being a range that is visible from a driver of the battery electric vehicle. The processing circuit may be configured to determine that the battery electric vehicle has passed the target vehicle, on condition that the target vehicle has gone out of the visible range.

In the sound control system according to the first aspect of the present disclosure, the processing circuit may be configured to change the characteristic of the artificial sound depending on the relative distance of the target vehicle with respect to the battery electric vehicle. The processing circuit may be configured to change the characteristic of the artificial sound depending on a virtual relative distance, after the battery electric vehicle has passed the target vehicle, the magnitude of the value of the virtual relative distance being larger than the magnitude of the value of the relative distance.

In the sound control system according to the first aspect of the present disclosure, the processing circuit may be configured to increase the frequency of the artificial sound as the value of the relative speed becomes larger in a direction of approaching the battery electric vehicle. The processing circuit may be configured to decrease the frequency of the artificial sound as the value of the relative speed becomes larger in a direction of receding from the battery electric vehicle.

In the sound control system according to the first aspect of the present disclosure, the processing circuit may be configured to decrease the sound pressure of the artificial sound as the value of the relative distance becomes larger.

In the sound control system according to the first aspect of the present disclosure, the artificial sound may include a pseudo engine sound that simulates an engine sound of an engine vehicle corresponding to classification of the target vehicle.

In the sound control system according to the first aspect of the present disclosure, the artificial sound may include a pseudo wind noise that simulates a wind noise that is generated by traveling of a vehicle corresponding to classification of the target vehicle.

In the sound control system according to the first aspect of the present disclosure, the processing circuit may be configured to output, from the speaker, a pseudo engine sound that is generated based on operation information about a constituent element of the battery electric vehicle.

In the sound control system according to the first aspect of the present disclosure, the constituent element may include an accelerator pedal and a sequential shifter.

In the sound control system according to the first aspect of the present disclosure, the constituent element may include an accelerator pedal, a pseudo clutch pedal, and a pseudo shift device.

In the sound control system according to the first aspect of the present disclosure, the pseudo engine sound may be generated so as to simulate an engine sound of a virtual engine vehicle that is selected from a plurality of virtual engine vehicles by a user.

A second aspect of the present disclosure is a battery electric vehicle configured to use an electric motor as a dynamic power device for traveling. The battery electric vehicle includes: a speaker; a sensor configured to detect information about a peripheral environment of the battery electric vehicle; and a processing circuit. The processing circuit is configured to recognize a target vehicle based on the information detected by the sensor, the target vehicle being at least one of other vehicles that travel in the periphery of the battery electric vehicle, is configured to generate an artificial sound related to the target vehicle, to output the artificial sound from the speaker, and is configured to change the characteristic of the artificial sound depending on the relative speed of the target vehicle with respect to the battery electric vehicle.

In the battery electric vehicle according to the second aspect of the present disclosure, the target vehicle may be a vehicle that is configured to travel in front of the battery electric vehicle. The processing circuit may be configured to change the characteristic of the artificial sound depending on a virtual relative speed, after the battery electric vehicle has passed the target vehicle, the magnitude of the value of the virtual relative speed being larger than the magnitude of the value of the relative speed.

In the battery electric vehicle according to the second aspect of the present disclosure, the processing circuit may be configured to output, from the speaker, a pseudo engine sound that is generated based on operation information about a constituent element of the battery electric vehicle.

In the battery electric vehicle according to the second aspect of the present disclosure, the battery electric vehicle may have a manual mode in which the driving characteristic of a manual transmission vehicle is simulated. The constituent element may include an accelerator pedal and a sequential shifter. The battery electric vehicle may be configured to change, depending on shift operation of the sequential shifter, the output characteristic of the electric motor due to operation of the accelerator pedal, in the manual mode.

In the battery electric vehicle according to the second aspect of the present disclosure, the battery electric vehicle may have a manual mode in which the driving characteristic of a manual transmission vehicle is simulated. The constituent element may include an accelerator pedal, a pseudo clutch pedal, and a pseudo shift device. The pseudo clutch pedal may be configured to operated when the pseudo shift device is operated. The battery electric vehicle may be configured to change, depending on operation of the pseudo clutch pedal and operation of the pseudo shift device, the output of the electric motor due to operation of the accelerator pedal, in the manual mode.

In the present disclosure, the artificial sound related to the target vehicle of other vehicles that travel in the periphery of the battery electric vehicle is output from the speaker. Further, the characteristic of the artificial sound that is output from the speaker is changed depending on the relative speed of the target vehicle with respect to the battery electric vehicle. Thereby, the driver of the battery electric vehicle can feel the relative speed of the target vehicle through the sound. This makes it easy for the driver to know the relative speed of the target vehicle with respect to the own vehicle, and makes it possible to increase the speed feeling that is recognized by the driver.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing the configuration of a sound control system according to an embodiment;
FIG. 2 is a block diagram showing an exemplary functional configuration related to a first function of the sound control system;
FIG. 3A is a diagram showing an exemplary frequency magnification that is calculated by a sound characteristic adjustment unit shown in FIG. 2;

FIG. 3B is a diagram showing an exemplary sound pressure magnification that is calculated by the sound characteristic adjustment unit shown in FIG. 2;

FIG. 4 is a diagram showing an example according to the first function of the sound control system;

FIG. 5A is a diagram showing an outline of a modification of the first function of the sound control system;

FIG. 5B is a diagram showing the outline of the modification of the first function of the sound control system;

FIG. 6 is a block diagram showing an exemplary functional configuration related to the modification of the first function of the sound control system;

FIG. 7A is a diagram showing an outline of a process in a passing determination unit shown in FIG. 6;

FIG. 7B is a diagram showing the outline of the process in the passing determination unit shown in FIG. 6;

FIG. 8 is a flowchart showing a processing flow of a process that is executed by the sound control system based on the functional configuration shown in FIG. 6;

FIG. 9 is a diagram showing an example according to the modification of the first function of the sound control system;

FIG. 10 is a block diagram showing an exemplary functional configuration related to a second function of the sound control system;

FIG. 11 is a block diagram showing a first exemplary configuration of a dynamic power control system of a battery electric vehicle;

FIG. 12 is a diagram showing each example of an engine model, a clutch model, and a transmission model that constitute an MT vehicle model;

FIG. 13 is a diagram showing a torque characteristic of an electric motor that is realized by a motor control in which the MT vehicle model is used, with the comparison to a torque characteristic of the electric motor that is realized by an ordinary motor control for the battery electric vehicle; and

FIG. 14 is a block diagram showing a second exemplary configuration of the dynamic power control system of the battery electric vehicle.

DETAILED DESCRIPTION OF EMBODIMENTS

An embodiment of the present disclosure will be described below with reference to the accompanying drawings. In the figures, identical or corresponding constituents will be denoted by identical reference characters, and descriptions thereof will be simplified or omitted.

1 Sound Control System

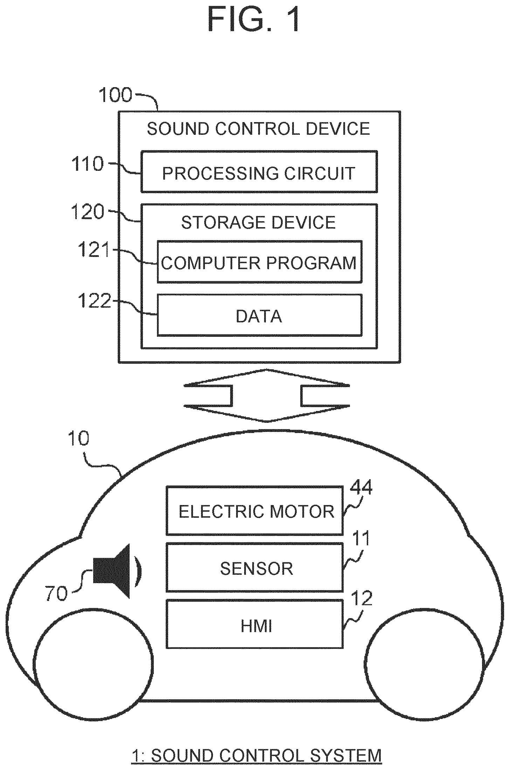

FIG. 1 is a diagram showing the configuration of a sound control system 1 according to an embodiment.

The sound control system 1 is applied to a battery electric vehicle 10. The battery electric vehicle 10 includes an electric motor 44 as a drive source. As the electric motor 44, for example, a brushless DC motor or a three-phase alternating-current synchronous motor is used. The battery electric vehicle 10 uses the electric motor 44 as a dynamic power device for traveling.

Further, the battery electric vehicle 10 includes various sensors 11. The sensors 11 include a sensor that detects information about a peripheral environment (e.g.; another vehicle, a white line, a pedestrian, an obstacle, a traffic sign, and a traffic light) of the battery electric vehicle 10. Examples of the sensor that detects the information about the peripheral environment include a camera, a light detection and ranging (LiDAR), and a radar. The sensors 11 further include a sensor that detects information about the driving state of the battery electric vehicle 10. Examples of the sensor that detects the driving state of the battery electric vehicle 10 include an accelerator position sensor, a brake position sensor, a steering angle sensor, a steering torque sensor, a wheel speed sensor, an acceleration sensor, a rotation speed sensor, and a position sensor. The accelerator position sensor detects the operation amount (accelerator operation amount) of an accelerator pedal. The brake position sensor detects the operation amount (brake operation amount) of a brake pedal. The steering angle sensor detects the steering angle of a steering wheel. The steering torque sensor detects the steering torque of the steering wheel. The wheel speed sensor detects the rotation speed of a wheel of the battery electric vehicle 10. The rotation speed sensor detects the rotation speed of the electric motor 44. The position sensor detects the position of the battery electric vehicle 10. Examples of the position sensor include a global navigation satellite system (GNSS) sensor. Further, in the case where the battery electric vehicle 10 has a later-described manual mode (MT mode), examples of the sensor that detects the driving state of the battery electric vehicle 10 include a sensor that detects the operation state of a pseudo shift operation member. For example, there are a clutch position sensor and a shift position sensor in the case where the pseudo shift operation member is constituted by a pseudo clutch pedal and a pseudo shift device. The sensors 11 may further include a sensor that detects other information. For example, the sensors 11 may include a driver monitor that detects information about the state (e.g.; the direction of the visual line, the orientation of the face, the identification number, and driver's attribute) of a driver of the battery electric vehicle 10.

Further, the battery electric vehicle 10 is equipped with a single or a plurality of speakers 70. Typically, the speaker 70 is a vehicle-interior speaker that outputs sound in a vehicle cabin of the battery electric vehicle 10. The speaker 70 may include a vehicle-exterior speaker that outputs sound to the exterior of the battery electric vehicle 10.

Further, the battery electric vehicle 10 includes a human-machine interface (HMI) 12 as an interface for a user. The HMI 12 presents a variety of information to the user through displayed information or sound, and accepts a variety of inputs from the user. The HMI 12 is constituted by a display (e.g.; a multi-information display and a meter display), a switch (e.g.; a steering switch and a door switch), a touch-pad, a speakerphone, a touch-screen, and the like.

The sound control system 1 includes a sound control device 100 that is connected to constituent elements of the battery electric vehicle 10. The sound control device 100 generates the sound that is output from the speaker 70 equipped in the battery electric vehicle 10, and outputs the generated sound from the speaker 70 equipped in the battery electric vehicle 10. The whole of the sound control device 100 may be equipped in the battery electric vehicle 10. As another example, at least a part of the sound control device 100 may be included in a management server in the exterior of the battery electric vehicle 10. Furthermore, as another example, the sound control device 100 may be distributed to the battery electric vehicle 10 and the management server.

The sound control device 100 includes a processing circuit 110 and a single or a plurality of storage devices 120 (referred to as merely a storage device 120, hereinafter). The processing circuit 110 executes various processes. For example, the processing circuit 110 is constituted by a general-purpose processor, a specialized-application processor, a central processing unit (CPU), a graphics processing unit (GPU), an application specific integrated circuit (ASIC), a field-programmable gate array (FPGA), an integrated circuit, a conventional circuit, and a single or a plurality of combinations of them. A processor including a transistor and other circuits is an example of the processing circuit 110. The processing circuit 110 can be called a circuitry or a processing circuitry. The circuitry is hardware that is programed such that functions described in the present disclosure are realized, or hardware that executes the functions.

The storage device 120 stores a variety of information necessary for the execution of processes by the processing circuit 110. For example, the storage device 120 is constituted by recording media such as a random-access memory (RAM), a read-only memory (ROM), a solid state drive (SSD), and a hard disk drive (HDD). The storage device 120 stores a computer program 121 that can be executed by the processing circuit 110, and a variety of data 122. The computer program 121 is constituted by a plurality of instructions in which processes to be executed by the processing circuit 110 are written. The computer program 121 may be recorded in a computer-readable recording medium. Functions of the sound control device 100 are realized by the cooperation between the processing circuit 110 that executes the computer program 121 and the storage device 120.

The sound control system 1 provides functions to output various sounds from the speaker 70, based on the above-described configuration. The functions that are provided by the sound control system 1 will be described below.

## 2 Output of Artificial Sound Related to Target Vehicle

A first function of the sound control system 1 is a function to recognize a target vehicle from other vehicles that travel in the periphery of the battery electric vehicle 10 and to output an artificial sound related to the target vehicle, from the speaker 70.

### 2.1 Functional Configuration

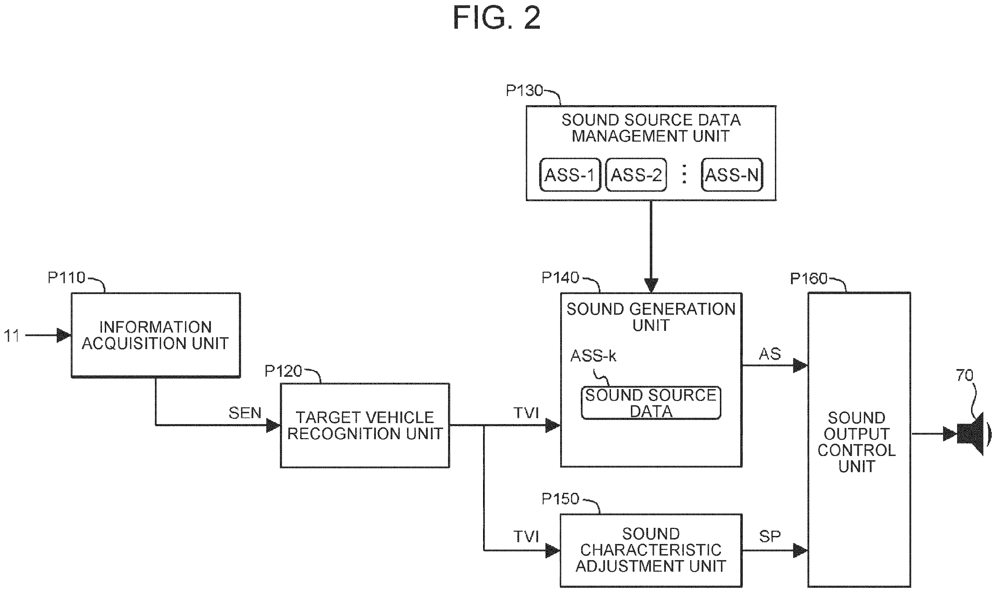

FIG. 2 is a block diagram showing an exemplary functional configuration related to the first function of the sound control system 1. The sound control system 1 includes an information acquisition unit P110, a target vehicle recognition unit P120, a sound source data management unit P130, a sound generation unit P140, a sound characteristic adjustment unit P150, and a sound output control unit P160, as functional blocks. The functional blocks may be realized by the cooperation between the processing circuit 110 that executes the computer program 121 and the storage device 120.

The information acquisition unit P110 acquires a variety of information. Particularly, the information acquisition unit P110 acquires detection information SEN of various sensors 11 equipped in the battery electric vehicle 10. The detection information SEN includes information (peripheral environment information) about the peripheral environment of the battery electric vehicle 10.

The target vehicle recognition unit P120 acquires the detection information SEN from the information acquisition unit P110. Particularly, the target vehicle recognition unit P120 acquires the peripheral environment information from the information acquisition unit P110. Based on the peripheral environment information, the target vehicle recognition unit P120 determines situations of other vehicles that travel in the periphery of the battery electric vehicle 10, and decides the target vehicle from the other vehicles.

In the case where the number of other vehicles is one, the target vehicle recognition unit P120 may decide that the target vehicle is the other vehicle. In the case where there is a plurality of other vehicles, the target vehicle recognition unit P120 may decide the target vehicle using some indexes. Examples of the index include the relative speed of the other vehicle with respect to the battery electric vehicle 10, the positional relation of the other vehicle with respect to the battery electric vehicle 10, the vehicle type of the other vehicle, and the attribute (e.g.; an emergency vehicle, a battery electric vehicle, and an engine vehicle) of the other vehicle. For example, using the positional relation of the other vehicle with respect to the battery electric vehicle 10 as an index, the target vehicle recognition unit P120 excludes the other vehicle that is not traveling on an adjacent lane, from candidates of the target vehicle.

Further, for example, using the attribute of the other vehicle as an index, the target vehicle recognition unit P120 excludes the other vehicle that is an emergency vehicle, from candidates of the target vehicle. Further, for example, using the relative speed of the other vehicle with respect to the battery electric vehicle 10 as an index, the target vehicle recognition unit P120 decides that the target vehicle is the other vehicle that is largest among the other vehicles as candidates in the magnitude of the value of the relative speed. The target vehicle recognition unit P120 may decide a plurality of target vehicles. Particularly, the target vehicle recognition unit P120 may adopt all of the plurality of other vehicles, as target vehicles. A case where there is one target vehicle will be described below. The following description can be simply applied to a case where there is a plurality of target vehicles.

Furthermore, the target vehicle recognition unit P120 recognizes the target vehicle based on the peripheral environment information, and acquires information (target vehicle information) TVI about the target vehicle. The target vehicle information TVI includes classification of the target vehicle, the vehicle speed of the target vehicle, the relative speed of the target vehicle with respect to the battery electric vehicle 10, the relative distance of the target vehicle with respect to the battery electric vehicle 10, the position of the target vehicle with respect to the battery electric vehicle 10. The classification may be classification that indicates the class of the size of the vehicle. Alternatively, the classification may be classification that is given for each vehicle type in accordance with a general standard, for example, may be A-segment, B-segment, or the like.

The sound source data management unit P130 stores and manages sound source data ASS that is used for the generation of the artificial sound by the sound generation unit P140. Particularly, the sound source data management unit P130 stores and manages sound source data ASS (ASS-1, ..., ASS-n) for a plurality of kinds of artificial sounds respectively corresponding to a plurality of kinds of classification (1, ..., n). The sound source data management unit P130 is realized mainly by the storage device 120. Each sound source data ASS may be a part of the data 122.

An example of the artificial sound according to the first function is a pseudo engine sound that simulates an engine sound of an engine vehicle. In this case, each of the plurality of kinds of sound source data ASS that is managed by the sound source data management unit P130 is the sound source data ASS for an engine vehicle corresponding to classification. The sound source data ASS-i (1 < i < n) is previously generated through a simulation based on an engine model or vehicle model for a corresponding engine vehicle or a sound recording in an actual-vehicle test for the corresponding engine vehicle. Further, another example of the artificial sound according to the first function is a pseudo wind noise that simulates a wind noise that is generated by the traveling of the vehicle. In this case, each of the plurality of kinds of sound source data ASS that is managed by the sound source data management unit P130 is the sound source data ASS for a vehicle corresponding to classification. The sound source data ASS-i is previously generated through a simulation based on a vehicle model for a corresponding vehicle or a sound recording in an actual-vehicle test for the corresponding vehicle.

The sound generation unit P140 is a simulator that generates the artificial sound. The sound generation unit P140 acquires the target vehicle information TVI from the target vehicle recognition unit P120. Furthermore, the sound generation unit P140 refers to the target vehicle information TVI, determines the classification of the target vehicle, and acquires sound source data ASS-k corresponding to the classification vehicle of the target vehicle from the sound source data management unit P130. Then, the sound generation unit P140 generates the artificial sound (the pseudo engine sound or the pseudo wind noise), using the sound source data ASS-k. Artificial sound data AS is data that indicates the generated artificial sound. The artificial sound data AS is sent to the sound output control unit P160.

The generation technique for the artificial sound with use of the sound source data ASS is not particularly limited, and a suitable technology may be applied. For example, the pseudo engine sound and the pseudo wind noise may be generated by a well-known simulator that is employed for games and the like.

Furthermore, the sound generation unit P140 can be configured to accept an input for designating the sound source data ASS from the user through the HMI 12, and to generate the artificial sound using the designated sound source data ASS. In this case, the sound source data management unit P130 may further store and manage sound source data for generating arbitrary artificial sounds that can be designated by the user. For example, the sound source data management unit P130 may store and manage sound source data for generating the drive sound of a different movable body (e.g.; an electric train and an airplane) from the vehicle, sound source data for generating a sound having a particular scale, or sound source data for generating a particular music.

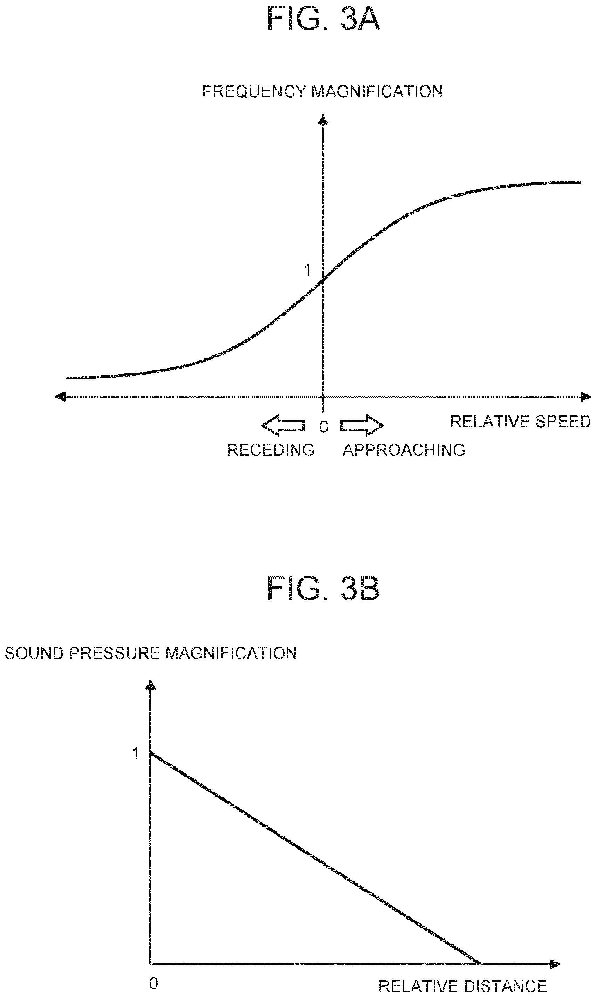

The sound characteristic adjustment unit P150 adjusts the characteristic (frequency and sound pressure) of the artificial sound when the artificial sound generated by the sound generation unit P140 is output from the speaker 70. The sound characteristic adjustment unit P150 acquires the target vehicle information TVI from the target vehicle recognition unit P120. The sound characteristic adjustment unit P150 refers to the target vehicle information TVI, and acquires the relative speed of the target vehicle with respect to the battery electric vehicle 10. Then, the sound characteristic adjustment unit P150 calculates the adjustment amount of the frequency of the artificial sound that is output from the speaker 70, depending on the acquired relative speed of the target vehicle. More specifically, the sound characteristic adjustment unit P150 calculates the adjustment amount of the frequency of the artificial sound such that the frequency of the artificial sound becomes higher as the value of the relative speed of the target vehicle becomes larger in a direction of approaching the battery electric vehicle 10. Further, the sound characteristic adjustment unit P150 calculates the adjustment amount of the frequency of the artificial sound such that the frequency of the artificial sound becomes lower as the value of the relative speed of the target vehicle becomes larger in a direction receding from the battery electric vehicle 10. For example, the adjustment amount of the frequency can be expressed as a magnification with respect to a base frequency (referred to as a "frequency magnification" hereinafter). The base frequency is the original frequency of the artificial sound that is generated by the sound generation unit P140. FIG. 3A shows an exemplary frequency magnification that is calculated with respect to the value of the relative speed of the target vehicle. In the example shown in FIG. 3A, the frequency magnification that is calculated when the value of the relative speed of the target vehicle is 0 is 1. Moreover, the frequency magnification is calculated so as to become larger from 1 as the value of the relative speed becomes larger in the direction of approaching the battery electric vehicle 10. Further, the frequency magnification is calculated so as to become smaller from 1 as the value of the relative speed becomes larger in the direction of receding from the battery electric vehicle 10. In addition, the sound characteristic adjustment unit P150 may be configured to calculate the frequency magnification based on the formula of the Doppler effect.

Furthermore, the sound characteristic adjustment unit P150 refers to the target vehicle information TVI, and acquires the relative distance of the target vehicle with respect to the battery electric vehicle 10. Then, the sound characteristic adjustment unit P150 calculates the adjustment amount of the sound pressure of the artificial sound that is output from the speaker 70, depending on the acquired relative distance of the target vehicle. More specifically, the sound characteristic adjustment unit P150 calculates the adjustment amount of the sound pressure such that the sound pressure of the artificial sound becomes lower as the value of the relative distance of the target vehicle becomes larger. For example, the adjustment amount of the sound pressure can be expressed as a magnification with respect to a base sound pressure (referred to as a "sound pressure magnification" hereinafter). The base sound pressure is the original sound pressure of the artificial sound that is generated by the sound generation unit P140. FIG. 3B shows an exemplary sound pressure magnification that is calculated with respect to the value of the relative distance of the target vehicle. In the example shown in FIG. 3B, the sound pressure magnification that is calculated when the value of the relative distance of the target vehicle is 0 is 1. Moreover, the sound pressure magnification

cation is calculated so as to become smaller from 1 as the value of the relative distance becomes larger.

The sound characteristic adjustment unit P150 sets a sound characteristic specification SP that indicates the calculated adjustment amount of the frequency and the calculated adjustment amount of the sound pressure. The sound characteristic specification SP is sent to the sound output control unit P160.

The sound output control unit P160 acquires the artificial sound data AS from the sound generation unit P140. Further, the sound output control unit P160 acquires the sound characteristic specification SP from the sound characteristic adjustment unit P150. Then, the sound output control unit P160 outputs the artificial sound from the speaker 70, based on the artificial sound data AS. Particularly, the sound output control unit P160 changes the characteristic of the artificial sound that is output from the speaker 70, in accordance with the sound characteristic specification SP. More specifically, the sound output control unit P160 changes the frequency of the artificial sound by the adjustment amount (frequency magnification) of the frequency that is indicated by the sound characteristic specification SP. For example, the sound output control unit P160 can change the frequency of the artificial sound by controlling a frequency modulator (FMC). Further, the sound output control unit P160 changes the sound pressure of the artificial sound by the adjustment amount (sound pressure magnification) of the sound pressure that is indicated by the sound characteristic specification SP. For example, the sound output control unit P160 can change the sound pressure of the artificial sound by controlling an amplifier.

2.2 Example

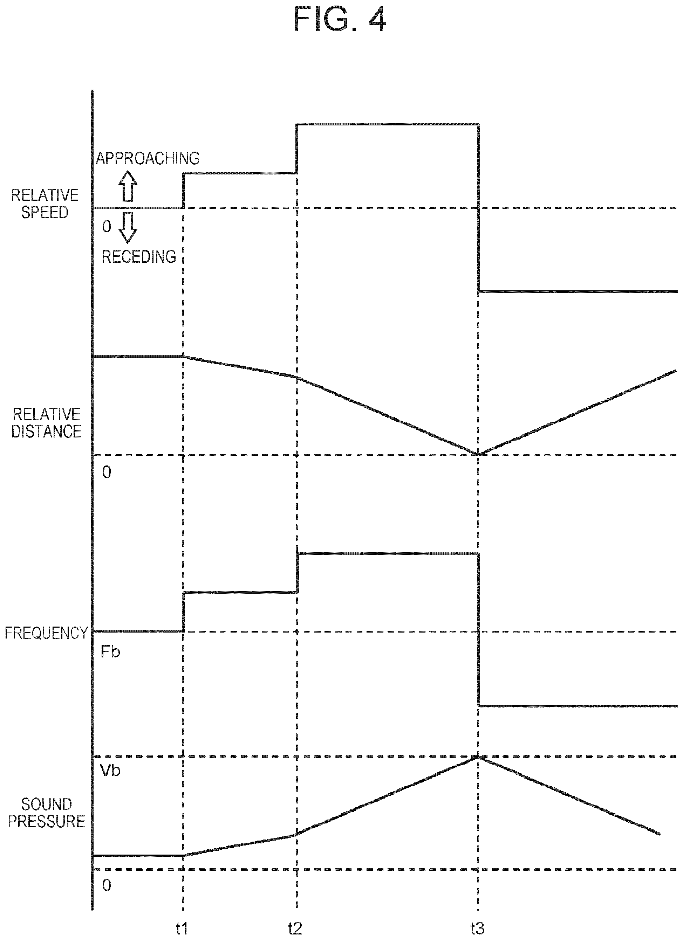

FIG. 4 is a diagram showing an example of the first function of the sound control system 1 based on the above-described functional configuration. The example shown in FIG. 4 shows a case where the target vehicle is another vehicle that travels in front of the battery electric vehicle 10 and where the battery electric vehicle 10 accelerates (time t1 to time t3) and overtakes the target vehicle (time t3). FIG. 4 shows a time-series pattern about the relative speed and relative distance of the target vehicle with respect to the battery electric vehicle 10 and the frequency and sound pressure of the artificial sound that is output from the speaker 70. Fb and Vb represent the base frequency and base sound pressure of the artificial sound, respectively. FIG. 4 shows a manner in which the frequency of the artificial sound is changed depending on the relative speed of the target vehicle. In this way, by the first function of the sound control system 1, the characteristic of the artificial sound that is output from the speaker 70 is changed depending on the relative speed of the target vehicle. Further, FIG. 4 shows a manner in which the sound pressure of the artificial sound is changed depending on the relative distance of the target vehicle. In this way, by the first function of the sound control system 1, the characteristic of the artificial sound that is output from the speaker 70 is further changed depending on the relative distance of the target vehicle.

2.3 Effect

As described above, by the first function of the sound control system 1 according to the embodiment, the artificial sound (the pseudo engine sound or the pseudo wind noise) related to the target vehicle of other vehicles that travel in the periphery of the battery electric vehicle 10 is output from the speaker 70. Further, the characteristic of the artificial sound that is output from the speaker 70 is changed depending on the relative speed of the target vehicle with respect to the battery electric vehicle 10. Thereby, the driver of the battery electric vehicle 10 can feel the relative speed of the target vehicle through the sound. This makes it easy for the driver to know the relative speed of the target vehicle with respect to the own vehicle, and makes it possible to increase a speed feeling that is recognized by the driver. Further, when the battery electric vehicle 10 accelerates, it is possible to increase an acceleration feeling that is recognized by the driver.

Furthermore, by the first function of the sound control system 1 according to the embodiment, the characteristic of the artificial sound that is output from the speaker 70 is changed also depending on the relative distance of the target vehicle with respect to the battery electric vehicle 10. Thereby, the driver of the battery electric vehicle 10 can feel the change in the relative distance of the target vehicle, through the sound. As a result, it is possible to further increase the speed feeling that is recognized by the driver.

2.4 Modification; Rendering of Speed Feeling When Target Speed Is Passed

There can be cases where the target vehicle is another vehicle that travels in front of the battery electric vehicle 10 and where the battery electric vehicle 10 travels so as to pass the target vehicle. One case is a case where the movement direction of the battery electric vehicle 10 is the same as the movement direction of the target vehicle and where the speed of the battery electric vehicle 10 is higher than the speed of the target vehicle. This case is a case where the battery electric vehicle 10 overtakes the target vehicle. Further, another case is a case where the movement direction of the battery electric vehicle 10 is opposite to the movement direction of the target vehicle. This case is a case where the battery electric vehicle 10 and the target vehicle pass each other.

In such cases, before the battery electric vehicle 10 passes the target vehicle, the battery electric vehicle 10 travels so as to approach the target vehicle. On the other hand, after the battery electric vehicle 10 passes the target vehicle, the battery electric vehicle 10 travels so as to recede from the target vehicle. Therefore, in the first function, the characteristic (the frequency and the sound pressure) of the artificial sound that is output from the speaker 70 changes significantly between before and after the passing. For example, the frequency of the artificial sound is high before the passing, and is low after the passing. Further, for example, the sound pressure of the artificial sound gradually becomes high before the passing, and gradually becomes low after the passing. Therefore, the driver of the battery electric vehicle 10 recognizes the speed feeling from the artificial sound that is output from the speaker 70, particularly when the battery electric vehicle 10 passes the target vehicle.

Hence, with a focus on the case where the battery electric vehicle 10 passes the target vehicle, in the first function of the sound control system 1, a configuration for further increasing the speed feeling that is recognized by the driver can be employed as described below.

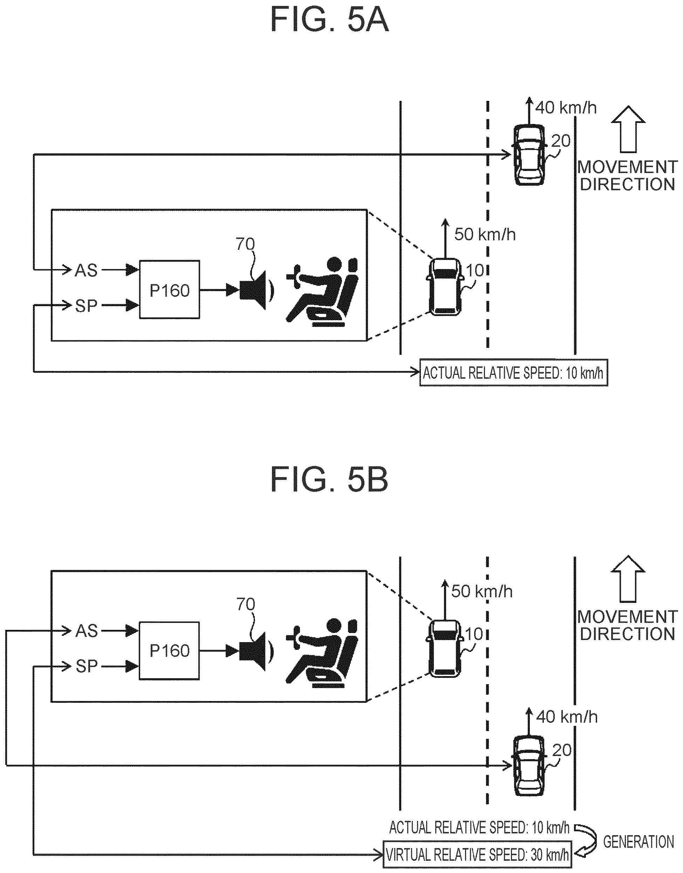

FIG. 5A and FIG. 5B are conceptual diagrams for describing an outline of a modification of the first function of the sound control system 1. FIG. 5A shows a case before the battery electric vehicle 10 passes (overtakes) a target vehicle 20 in front of the battery electric vehicle 10. FIG. 5B shows a case after the battery electric vehicle 10 has passed (overtaken) the target vehicle 20.

Before the battery electric vehicle 10 passes the target vehicle 20, the artificial sound that is output from the speaker 70 is the same as the artificial sound in the above-described ordinary first function. That is, the characteristic of the artificial sound that is output from the speaker 70 is changed depending on the real relative speed (actual relative speed) of the target vehicle 20 with respect to the battery electric vehicle 10.

On the other hand, after the battery electric vehicle 10 has passed the target vehicle 20, a virtual relative speed (virtual relative speed) that is larger in the magnitude of the value than the actual relative speed is generated. In FIG. 5A and FIG. 5B, the magnitude of the value of the actual relative speed is 10 km/h, and the magnitude of the value of the virtual relative speed is 30 km/h. Moreover, in the modification of the first function, the sound characteristic specification SP is set based on the generated virtual relative speed. That is, the characteristic of the artificial sound that is output from the speaker 70 is changed depending on the virtual relative speed that is larger in the magnitude of the value than the actual relative speed.

In this way, in the modification of the first function, it is possible to cause the driver to feel the relative speed that is larger than the real relative speed, after the battery electric vehicle 10 has passed the target vehicle 20. That is, it is possible to cause the driver to feel as if the battery electric vehicle 10 passed the target vehicle 20 faster. As a result, it is possible to increase the speed feeling that is recognized by the driver when the target vehicle is passed.

In the modification of the first function, as for the relative distance of the target vehicle 20 with respect to the battery electric vehicle 10, a virtual relative distance (virtual relative distance) may be generated similarly. That is, after the battery electric vehicle 10 has passed the target vehicle 20, the virtual relative distance that is larger in the magnitude of the value than the real relative distance (actual relative distance) of the target vehicle 20 with respect to the battery electric vehicle 10 may be generated. Then, the sound characteristic specification SP may be set based on the generated virtual relative distance. That is, the characteristic of the artificial sound that is output from the speaker 70 may be changed depending on the virtual relative distance. By this configuration, it is possible to further increase the speed feeling that is recognized by the driver when the target vehicle is passed.

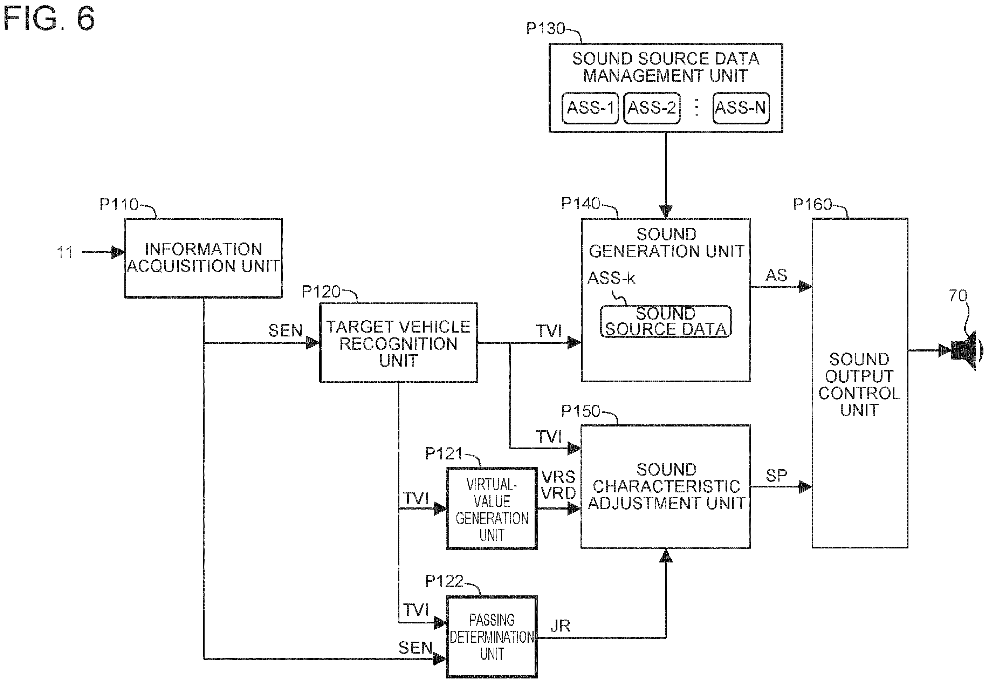

FIG. 6 is a block diagram showing an exemplary functional configuration related to the modification of the first function of the sound control system 1. In the example shown in FIG. 6, the sound control system 1 includes a virtual-value generation unit P121 and a passing determination unit P122, in addition to the functional blocks described in FIG. 2.

The virtual-value generation unit P121 generates a virtual relative speed VRS and a virtual relative distance VRD. The virtual-value generation unit P121 acquires the target vehicle information TVI from the target vehicle recognition unit P120. The virtual-value generation unit P121 refers to the target vehicle information TVI, and acquires the actual relative speed and the actual relative distance. Then, the virtual-value generation unit P121 generates the virtual relative speed VRS, such that the magnitude of the value of the virtual relative speed VRS is larger than the magnitude of the value of the acquired actual relative speed. For example, the virtual-value generation unit P121 generates the virtual relative speed VRS, by increasing the magnitude of the value of the actual relative speed by a predetermined value (for example, 20 km/h). Further, for example, the virtual-value generation unit P121 generates the virtual relative speed VRS, by multiplying the value of the actual relative speed by a predetermined coefficient larger than 1. Similarly, the virtual-value generation unit P121 generates the virtual relative distance VRD, such that the magnitude of the value of the virtual relative distance VRD is larger than the magnitude of the value of the acquired actual relative distance. The virtual relative speed VRS and the virtual relative distance VRD are sent to the sound characteristic adjustment unit P150.

The passing determination unit P122 acquires detection information SEN from the information acquisition unit P110. Further, the passing determination unit P122 acquires the target vehicle information TVI from the target vehicle recognition unit P120. Then, the passing determination unit P122 determines whether the battery electric vehicle 10 has passed the target vehicle 20, based on the detection information SEN and the target vehicle information TVI. For example, the passing determination unit P122 determines whether the battery electric vehicle 10 has passed the target vehicle 20, by referring to the detection information SEN and the target vehicle information TVI and acquiring the position of the target vehicle 20 with respect to the battery electric vehicle 10.

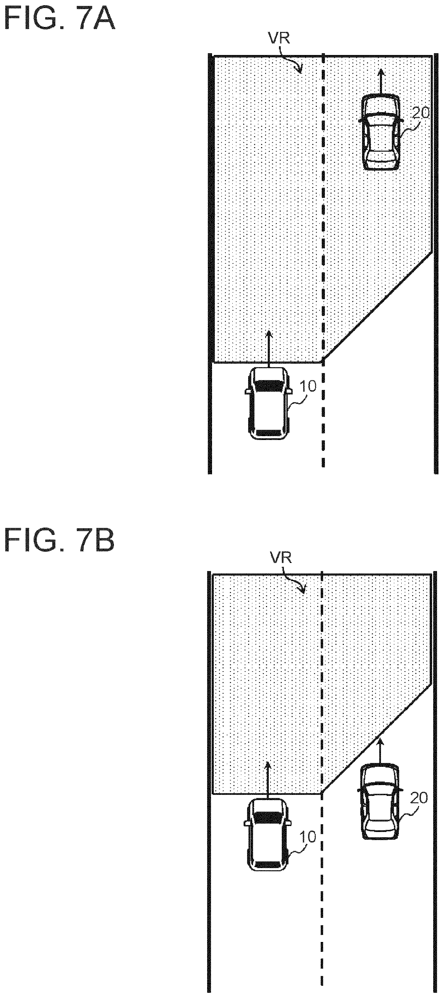

Particularly, the passing determination unit P122 may be configured to specify a visible range that is in front of the battery electric vehicle 10 and that is visible from the driver of the battery electric vehicle 10, when the passing determination unit P122 determines whether the battery electric vehicle 10 has passed the target vehicle 20. Moreover, the passing determination unit P122 may be configured to determine that the battery electric vehicle 10 has passed the target vehicle 20, on the condition that the target vehicle 20 has gone out of the visible range. FIG. 7A and FIG. 7B are conceptual diagrams showing an outline of a process in the passing determination unit P122. As for a visible range VR that is specified and the position of the target vehicle 20 with respect to the visible range VR, FIG. 7A shows a pattern A, and FIG. 7B shows a pattern B. The pattern A is an example of a case where the target vehicle 20 is included in the visible range VR. That is, in this case, the passing determination unit P122 determines that the battery electric vehicle 10 has not passed the target vehicle 20. The pattern B is an example of a case where the target vehicle is out of the visible range VR. That is, in this case, the passing determination unit P122 determines that the battery electric vehicle 10 has passed the target vehicle 20. By configuring the passing determination unit P122 in this way, it is possible to determine whether the battery electric vehicle 10 has passed the target vehicle 20, in tune with a situation that is recognized by the driver. As a result, it is possible to reduce the strangeness feeling of the driver.

For example, the visible range VR can be specified based on the visual field of the driver. For example, the passing determination unit P122 refers to the detection information SEN, and acquires information about the state of the driver. The passing determination unit P122 determines the viewing angle of the driver, from the direction of the visual line of the driver and the orientation of the face, and specifies the visible range VR depending on the viewing angle. Further, for example, the visible range can be specified based on the imaging range of the camera. For example, the passing determination unit P122 refers to the detection information SEN, and acquires information about the imaging range of the camera. The passing determination unit P122 specifies a range that is in front of the battery electric vehicle 10 and that is in the imaging range of the camera, as the visible range VR. Further, the passing determination unit P122 can acquire the position of the target vehicle 20 with respect to the visible range VR, by referring to the target vehicle information TVI.

FIG. 6 is referred to again. The passing determination unit P122 generates a determination result JR about whether the battery electric vehicle 10 has passed the target vehicle 20. The determination result JR is sent to the sound characteristic adjustment unit P150.

In the modification of the first function, furthermore, the sound characteristic adjustment unit P150 acquires the virtual relative speed VRS and the virtual relative distance VRD from the virtual-value generation unit P121. Further, the sound characteristic adjustment unit P150 acquires the determination result JR from the passing determination unit P122. When the sound characteristic adjustment unit P150 acquires the determination result JR indicating that the battery electric vehicle 10 has not overtaken the target vehicle 20, the sound characteristic adjustment unit P150 calculates the adjustment amounts of the frequency and sound pressure of the artificial sound that is output from the speaker 70, depending on each of the actual relative speed and actual relative distance acquired from the target vehicle recognition unit P120. On the other hand, when the sound characteristic adjustment unit P150 acquires the determination result JR indicating that the battery electric vehicle 10 has overtaken the target vehicle 20, the sound characteristic adjustment unit P150 calculates the adjustment amounts of the frequency and sound pressure of the artificial sound that is output from the speaker 70, depending on each of the virtual relative speed VRS and the virtual relative distance VRD. The calculation of the adjustment amounts of the frequency and sound pressure of the artificial sound may be the same as that in the case of the above-described first function (see FIG. 3A and FIG. 3B). The sound characteristic adjustment unit P150 sets the sound characteristic specification SP indicating the adjustment amounts of the frequency and the sound pressure that are calculated in this way.

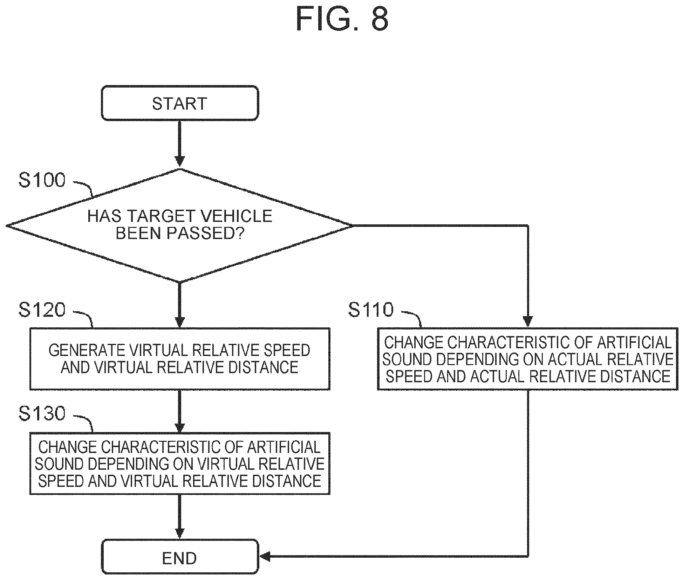

FIG. 8 is a flowchart showing a processing flow of a process that is executed by the sound control system 1 based on the functional configuration shown in FIG. 6.

In step S100, the sound control system 1 determines whether the battery electric vehicle 10 has passed the target vehicle 20. Particularly, the sound control system 1 may specify the visible range VR in front of the battery electric vehicle 10, and may determine that the battery electric vehicle 10 has passed the target vehicle 20, on the condition that the target vehicle 20 has gone out of the visible range VR.

In the case where it is determined that the battery electric vehicle 10 has not passed the target vehicle 20 (step S100; No), the sound control system 1 changes the characteristic of the artificial sound that is output from the speaker 70, depending on the actual relative speed and the actual relative distance (step S110).

In the case where it is determined that the battery electric vehicle 10 has passed the target vehicle 20 (step S100; Yes), the sound control system 1 generates the virtual relative speed VRS that is larger in the magnitude of the value than the actual relative speed and the virtual relative distance VRD that is larger in the magnitude of the value than the actual relative distance (step S120). Then, the sound control system 1 changes the characteristic of the artificial sound that is output from the speaker 70, depending on the virtual relative speed VRS and the virtual relative distance VRD (step S130).

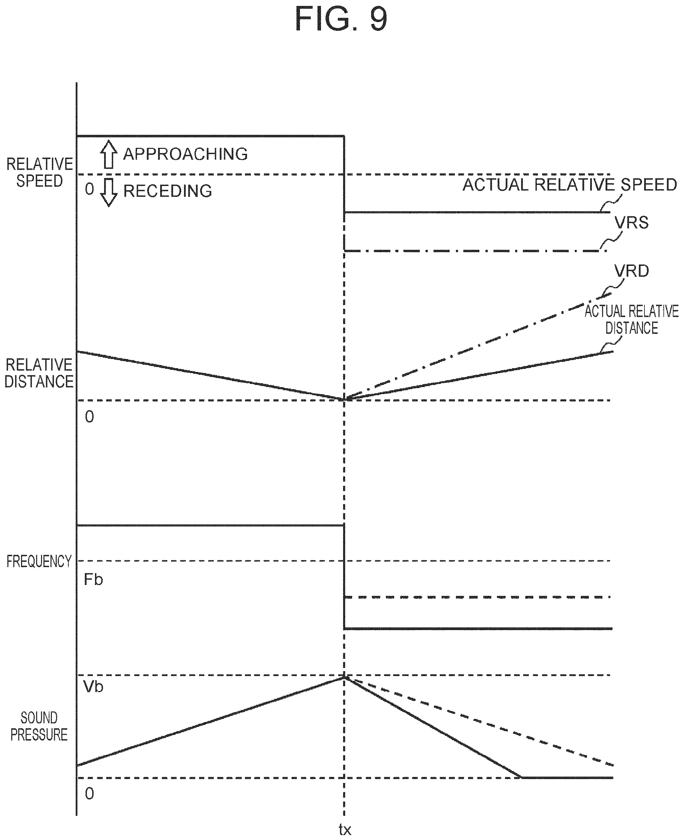

FIG. 9 is a diagram showing an example of the first function of the sound control system 1 based on the functional configuration shown in FIG. 6. The example shown in FIG. 9 shows a case where the battery electric vehicle 10 passes the target vehicle 20 in front of the battery electric vehicle 10 (time tx). FIG. 9 shows a manner in which the frequency of the artificial sound is changed depending on the virtual relative speed VRS after the battery electric vehicle 10 has passed the target vehicle 20. Particularly, it is found that the frequency of the artificial sound is changed so as to be larger than a frequency (broken line) depending to the actual relative speed, after the battery electric vehicle 10 has passed the target vehicle 20. Further, similarly, FIG. 9 shows a manner in which the sound pressure of the artificial sound is changed depending on the virtual relative distance VRD after the battery electric vehicle 10 has passed the target vehicle 20. Particularly, it is found that the change in the sound pressure of the artificial sound is larger than the change in the sound pressure (broken line) depending on the actual relative distance, after the battery electric vehicle 10 has passed the target vehicle 20. In this way, in the modification of the first function of the sound control system 1, it is possible to cause the driver to feel as if the battery electric vehicle 10 passed the target vehicle 20 faster. As a result, it is possible to further increase the speed feeling that is recognized by the driver when the battery electric vehicle 10 passes the target vehicle.

3 Output of Pseudo Engine Sound Depending on Driving Operation

A second function of the sound control system 1 is a function to output, from the speaker 70, a pseudo engine sound that is generated based on the operation information about constituent elements of the battery electric vehicle 10. The constituent elements of the battery electric vehicle 10 include the accelerator pedal, the brake pedal, the steering wheel, and the like. Further, in the case where the battery electric vehicle 10 has the later-described manual mode (MT mode), the constituent elements include the pseudo shift operation member such as a sequential shifter, the pseudo clutch pedal, and the pseudo shift device.

The second function of the sound control system 1 may be provided together with the first function. In this case, the pseudo engine sound according to the second function is output from the speaker 70, while being superimposed on the artificial sound according to the first function.

3.1 Functional Configuration

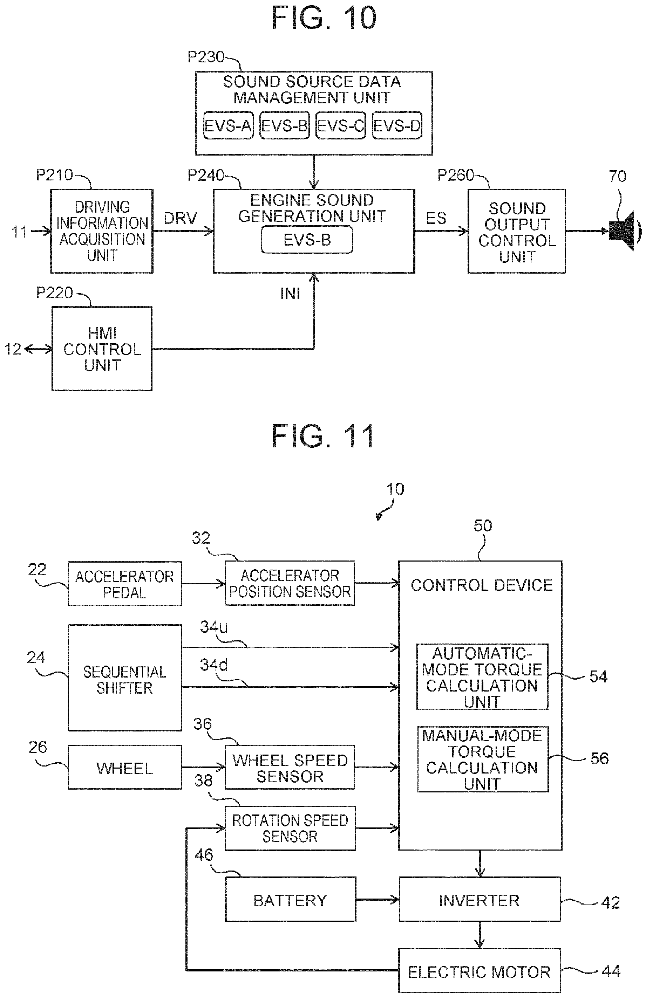

FIG. 10 is a block diagram showing an exemplary functional configuration related to the second function of the sound control system 1. The sound control system 1 includes a driving information acquisition unit P210, an HMI control unit P220, a sound source data management unit P230, an engine sound generation unit P240, and a sound output control unit P260, as functional blocks. The functional blocks may be realized by the cooperation between the processing circuit 110 that executes the computer program 121 and the storage device 120.

The driving information acquisition unit P210 acquires driving information DRV relevant to the battery electric vehicle 10. The driving information DRV includes operation information relevant to the driving operation by the driver of the battery electric vehicle 10, information relevant to the traveling state of the battery electric vehicle 10, and the like. Typically, the driving information DRV includes information that is detected by various sensors 11 equipped in the battery electric vehicle 10. For example, the driving information DRV includes the operation amount (accelerator operation amount) of the accelerator pedal, the operation amount (brake operation amount) of the brake pedal, the wheel speed, the vehicle speed, the forward and rearward accelerations, the rotation speed of the electric motor 44, and the like.

Further, the driving information DRV includes a virtual engine speed Ne. It is assumed that the battery electric vehicle 10 uses a virtual engine as a dynamic power device for traveling. The virtual engine speed Ne is the rotation speed of the virtual engine when it is assumed that the battery electric vehicle 10 is driven by the virtual engine. For example, the driving information acquisition unit P210 may calculate the virtual engine speed Ne such that the virtual engine speed Ne increases as the wheel speed increases. Further, in the case where the battery electric vehicle 10 has the later-described manual mode (MT mode), the driving information acquisition unit P210 may calculate the virtual engine speed Ne in the manual mode, based on the wheel speed, the total reduction ratio, and the slip ratio of a virtual clutch. Details of the calculation method for the virtual engine speed Ne in the manual mode will be described later.

The sound source data management unit P230 stores sound source data EVS for the engine vehicle that is used for generating the pseudo engine sound. Particularly, the sound source data management unit P230 stores a plurality of kinds of sound source data EVS (EVS-A, EVS-B, EVS-C, and EVS-D) respectively corresponding to a plurality of virtual engine vehicles (A, B, C, and D). That is, the sound source data management unit P230 stores and manages the sound source data EVS for each virtual engine vehicle. Each sound source data EVS is previously generated, for example, through a simulation based on the engine model or vehicle model of the corresponding virtual engine vehicle. Typically, the sound source data EVS is constituted by a plurality of kinds of sound source data. For example, the plurality of kinds of sound source data includes sound source data (data for low speed, data for middle speed, and data for high speed) about the sound due to engine combustion, sound source data (data for low speed, data for middle speed, and data for high speed) about the sound due to a drive system such as a gear, sound source data about noise sound, sound source data about even sound (e.g.; rasping sound and engine stall sound). Each sound source data can be flexibly adjusted. That is, at least one of the sound pressure and frequency of the sound that is shown by the sound source data can be flexibly adjusted. The sound source data management unit P230 is realized mainly by the storage device 120. Each sound source data EVS may be a part of the data 122.

The HMI control unit P220 controls the HMI 12, and thereby, accepts an input for selecting one virtual vehicle of the plurality of virtual vehicles, from the user. For example, the HMI control unit P220 displays a list of the plurality of virtual engine vehicle, on the HMI 12. Then, the HMI control unit P220 accepts the selection input for each virtual engine vehicle of the list. The user can perform the selection input so as to select user's favorite virtual engine vehicle from the plurality of virtual engine vehicles of the list. The HMI control unit P220 generates input information INI that indicates the virtual engine vehicle selected by the user. The input information INI is sent to the engine sound generation unit P240.

The engine sound generation unit P240 is a simulator that generates the pseudo engine sound. The engine sound generation unit P240 acquires at least a part of the driving information DRV from the driving information acquisition unit P210. Particularly, the engine sound generation unit P240 acquires the accelerator operation amount and the virtual engine speed Ne from the driving information acquisition unit P210. Further, the engine sound generation unit P240 refers to the input information INI acquired from the HMI control unit P220, and determines the virtual engine vehicle selected by the user. The engine sound generation unit P240 acquires the sound source data EVS corresponding to the virtual engine vehicle selected by the user, from the sound source data management unit P230. FIG. 10 shows a case where the engine sound generation unit P240 acquires the sound source data EVS-B corresponding to the virtual engine vehicle B. Then, the engine sound generation unit P240 generates the pseudo engine sound depending on the driving operation (the accelerator operation amount and the virtual engine speed Ne) of the battery electric vehicle, using the acquired sound source data EVS. Engine sound data ES is data that indicates the generated pseudo engine sound. The generation of the pseudo engine sound is a well-known technology, and is not particularly limited in the embodiment. For example, it is allowable to adopt a technique in which a map about the accelerator operation amount and the sound pressure and a map about the virtual engine speed Ne and the frequency are prepared, the sound pressure is increased or decreased in proportion to the accelerator operation amount, and the frequency of the pseudo engine sound is increased or decreased in proportion to the virtual engine speed Ne.

The sound output control unit P260 receives the engine sound data ES generated by the engine sound generation unit P240. Then, the sound output control unit P260 outputs the pseudo engine sound from the speaker 70, based on the engine sound data ES.

3.2 Effect

As described above, by the second function of the sound control system 1 according to the embodiment, the pseudo engine sound that is generated based on the operation information about constituent elements of the battery electric vehicle 10 is output from the speaker 70. Thereby, the driver can have a realistic sensation that the driver is driving a real engine vehicle. Particularly, the pseudo engine sound that is output from the speaker 70 is a pseudo engine sound that simulates the engine sound of the virtual engine vehicle selected by the user. Accordingly, the driver can get a sensation that the driver is driving user's favorite engine vehicle.

3.3 Application to Battery Electric Vehicle Having Manual Mode (MT Mode)

An electric motor that is used as a dynamic power device for traveling in a general battery electric vehicle is significantly different in torque characteristic from an internal combustion engine that is used as a dynamic power device for traveling in a conventional vehicle (CV). Because of the difference in the torque characteristic of the dynamic power device, the CV needs a transmission, but the battery electric vehicle generally does not include the transmission. Naturally, the general battery electric vehicle does not include a manual transmission (MT) that switches gear ratio in response to the manual operation by the driver. Therefore, there is a significant difference in driving sensation between the driving of a conventional vehicle with the MT (referred to as an MT vehicle, hereinafter) and the driving of the battery electric vehicle.

Meanwhile, in the electric motor, the torque can be relatively easily controlled by controlling the voltage and magnetic field that are applied. Accordingly, in the electric motor, it is possible to obtain a desired torque characteristic within the operating range of the electric motor, by executing an appropriate control. Utilizing this feature, it is possible to simulate a torque characteristic specific to the MT vehicle, by controlling the torque of the battery electric vehicle. Further, it is possible to provide a pseudo shifter in the battery electric vehicle, in order that the driver can get a driving sensation that the driver is driving the MT vehicle. As a result, it is possible to simulate the MT vehicle in the battery electric vehicle.

That is, the battery electric vehicle controls the output of the electric motor, so as to simulate the driving characteristic (torque characteristic) specific to the MT vehicle. The driver performs a pseudo manual shift operation, while operating the pseudo shifter. In response to the pseudo manual shift operation by the driver, the battery electric vehicle changes the driving characteristic (torque characteristic) so as to simulate the MT vehicle. Thereby, the driver of the battery electric vehicle can feel as if the driver were driving the MT vehicle. The control mode of the electric motor for simulating the driving characteristic of the MT vehicle and the manual shift operation in this way is referred to as a "manual mode" or "MT mode", hereinafter.

The battery electric vehicle 10 according to the present disclosure may have this manual mode (MT mode). In the MT mode, the battery electric vehicle 10 generates the pseudo engine sound depending on the driving operation by the driver, and outputs the pseudo engine sound through the speaker 70. Since not only the driving operation of the MT vehicle but also the engine sound of the MT vehicle is reproduced, the satisfaction level of a driver that wants reality increases.

Exemplary configurations of the battery electric vehicle 10 having the manual mode (MT mode) will be described below.

3.3.1 First Exemplary Configuration (Sequential Shifter)

FIG. 11 is a block diagram showing a first exemplary configuration of a dynamic power control system of the battery electric vehicle 10 according to the embodiment. The battery electric vehicle 10 includes the electric motor 44, a battery 46, and an inverter 42. The electric motor 44 is a dynamic power device for traveling. The battery 46 stores electric energy for driving the electric motor 44. That is, the battery electric vehicle 10 is a battery electric vehicle (BEV) that travels using the electric energy stored in the battery 46. The inverter 42 converts direct-current power that is input from the battery 46 at the time of acceleration, into electric power for driving the electric motor 44. Further, the inverter 42 converts regenerative electric power that is input from the electric motor 44 at the time of deceleration, into direct-current power, and charges the battery 46.

The battery electric vehicle 10 includes an accelerator pedal 22 through which the driver inputs an acceleration request to the battery electric vehicle 10. The accelerator pedal 22 is provided with an accelerator position sensor 32 for detecting the accelerator operation amount.

The battery electric vehicle 10 includes a sequential shifter 24. The sequential shifter 24 may be a paddle-type shifter, or may be a lever-type pseudo shifter.

The paddle-type shifter is a dummy that is different from an original paddle-type shifter. The paddle-type shifter has a structure that is similar to a paddle-type shifter included in a clutch pedal-less MT vehicle. The paddle-type shifter is attached to the steering wheel. The paddle-type shifter includes an upshift switch and a downshift switch that decide an operation position. The upshift switch transmits an upshift signal 34u when being pulled to the near side, and the downshift switch transmits a downshift signal 34d when being pulled to the near side.

On the other hand, the lever-type pseudo shifter is a dummy that is different from an original shifter, similarly to the paddle-type shifter. The lever-type pseudo shifter has a structure that is similar to a lever-type shifter included in a clutch pedal-less MT vehicle. The lever-type pseudo shifter is configured to output the upshift signal 34u when a shift lever is leaned forward, and to output the downshift signal 34d when the shift lever is leaned rearward.

A wheel speed sensor 36 is provided at a wheel 26 of the battery electric vehicle 10. The wheel speed sensor 36 is used as a vehicle speed sensor for detecting the vehicle speed of the battery electric vehicle 10. Further, a rotation speed sensor 38 for detecting the rotation speed of the electric motor 44 is provided at the electric motor 44.

The battery electric vehicle 10 includes a control device 50. Typically, the control device 50 is an electronic control unit (ECU) that is equipped in the battery electric vehicle 10. The control device 50 may be a combination of a plurality of ECUs. The control device 50 includes an interface, a memory, and a processor. An in-vehicle network is connected to the interface. The memory includes a RAM in which data is temporarily recorded, and a ROM in which programs capable of being executed by the processor and a variety of data related to the programs are saved. Each of the programs is constituted by a plurality of instructions. The processor reads programs and data from the memory, for execution, and generates a control signal based on signals acquired from sensors.

For example, the control device 50 controls the electric motor 44 by the PWM control of the inverter 42. The control device 50 receives signals from the accelerator position sensor 32, the sequential shifter 24 (the upshift switch and the downshift switch in the case where the sequential shifter 24 is the paddle-type shifter), the wheel speed sensor 36, and the rotation speed sensor 38. The control device 50 processes the signals, and calculates a motor torque command value for the PWM control of the inverter 42.

The control device 50 includes an automatic mode (EV mode) and the manual mode (MT mode), as the control mode. The automatic mode is an ordinary control mode for driving the battery electric vehicle 10 as a general battery electric vehicle. In the automatic mode, by programs, the output of the electric motor 44 is continuously changed depending on the operation of the accelerator pedal 22. On the other hand, the manual mode is a control mode for driving the battery electric vehicle 10 as if the battery electric vehicle 10 were an MT vehicle. In the manual mode, by programs, the output characteristic of the electric motor 44 due to the operation of the accelerator pedal 22 is changed depending on the upshift operation and downshift operation of the sequential shifter 24. That is, the manual mode is a control mode in which the output of the electric motor 44 can be changed in response to the driving operation of a vehicle constituent element other than the accelerator pedal 22 or the brake pedal. Switching between the automatic mode (EV mode) and the manual mode (MT mode) is possible.

The control device 50 includes an automatic-mode torque calculation unit 54 and a manual-mode torque calculation unit 56. The units 54, 56 may be independent ECUs from each other, or may be functions of the ECU that are obtained when programs recorded in the memory are executed by the processor.

The automatic-mode torque calculation unit 54 has a function to calculate the motor torque when the electric motor 44 is controlled in the automatic mode. A motor torque command map is stored in the automatic-mode torque calculation unit 54. The motor torque command map is a map that decides the motor torque from the accelerator operation amount and the rotation speed of the electric motor 44. As parameters of the motor torque command map, the signal from the accelerator position sensor 32 and the signal from the rotation speed sensor 38 are input. A motor torque corresponding to these signals is output from the motor torque command map. Therefore, in the automatic mode, even when the driver operates the sequential shifter 24, the operation is not reflected in the motor torque.

The manual-mode torque calculation unit 56 includes an MT vehicle model. The MT vehicle model is a model for calculating a drive wheel torque that would be obtained by the operation of the accelerator pedal 22 and the sequential shifter 24 if the battery electric vehicle 10 were an MT vehicle.

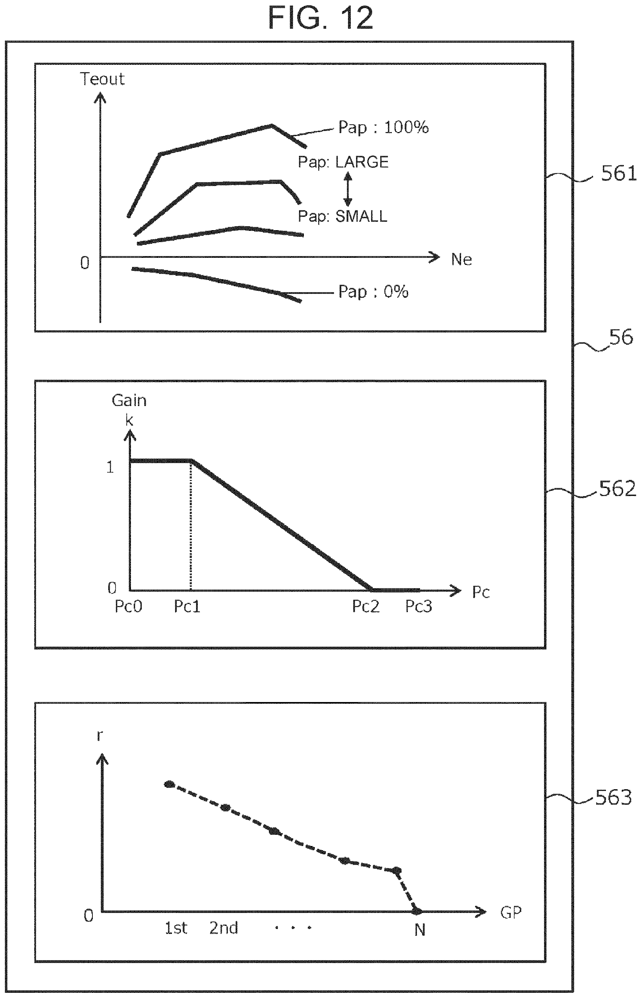

The MT vehicle model included in the manual-mode torque calculation unit 56 will be described with reference to FIG. 12. As shown in FIG. 12, the MT vehicle model includes an engine model 561, a clutch model 562, and a transmission model 563. An engine, a clutch, and a transmission that are virtually realized by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates the virtual engine speed Ne and a virtual engine output torque Teout. The virtual engine speed Ne is calculated based on a rotation speed Nw of the wheel, a total reduction ratio R, and a slip ratio Rslip of the virtual clutch. For example, the virtual engine speed Ne is expressed as the following expression (1).

$$\text{Expression (1): } Ne = Nw \times R / (1 - Rslip)$$

The virtual engine output torque Teout is calculated from the virtual engine speed Ne and an accelerator operation amount Pap. In the calculation of the virtual engine output torque Teout, a map that prescribes the relation of the accelerator operation amount Pap, the virtual engine speed Ne, and the virtual engine output torque Teout as shown in FIG. 12 is used. In this map, the virtual engine output torque Teout with respect to the virtual engine speed Ne is given for each accelerator operation amount Pap. The torque characteristic shown in FIG. 12 can be set as a characteristic for which a gasoline engine is assumed, or can be set as a characteristic for which a diesel engine is assumed. Further, the torque characteristic can be set as a characteristic for which a naturally aspirated engine is assumed, or can be set as a characteristic for which a supercharged engine is assumed.

The clutch model 562 calculates a torque transmission gain K. The torque transmission gain K is a gain for calculating a torque transmission degree of the virtual clutch depending on a virtual clutch opening degree Pc. The virtual clutch opening degree Pc is ordinarily 0%, and is temporarily opened to 100% in conjunction with the switching of a virtual gear step of the virtual transmission. The clutch model 562 has a map shown in FIG. 12. In this map, the torque transmission gain K is given with respect to the virtual clutch opening degree Pc. In FIG. 12, Pc0 corresponds to a position when the virtual clutch opening degree Pc is 0%, and Pc3 corresponds to a position when the virtual clutch opening degree Pc is 100%. A range from Pc0 to Pc1 and a range from Pc2 to Pc3 are dead zones in which the torque transmission gain K is not changed regardless of the virtual clutch opening degree Pc. The clutch model 562 calculates a clutch output torque Tcout using the torque transmission gain K. The clutch output torque Tcout is a torque that is output from the virtual clutch. For example, the clutch output torque Tcout is given as the product of the virtual engine output torque Teout and the torque transmission gain K (Tcout = Teout × K).

Further, the clutch model 562 calculates the slip ratio Rslip. The slip ratio Rslip is used for the calculation of the virtual engine speed Ne in the engine model 561. In the calculation of the slip ratio Rslip, a map in which the slip ratio Rslip is given with respect to the virtual clutch opening degree Pc can be used similarly to the torque transmission gain K.

The transmission model 563 calculates a gear ratio r. The gear ratio r is a gear ratio that is decided by a virtual gear step GP in the virtual transmission. In response to the upshift operation of the sequential shifter 24, the virtual gear step GP is shifted up by one step. On the other hand, in response to the downshift operation of the sequential shifter 24, the virtual gear step GP is shifted down by one step. The transmission model 563 has a map shown in FIG. 12. In this map, the gear ratio r is given with respect to the virtual gear step GP, such that the gear ratio r is lower as the virtual gear step GP is higher. The transmission model 563 calculates a transmission output torque Tgout using the gear ratio r obtained from the map and the clutch output torque Tcout. For example, the transmission output torque Tgout is given as the product of the clutch output torque Tcout and the gear ratio r (Tgout = Tcout × r). The transmission output torque Tgout is discontinuously changed depending on the switching of the gear ratio r. The discontinuous change in the transmission output torque Tgout generates gear shift shock, so that a vehicle including a stepped transmission is simulated.

The MT vehicle model calculates a drive wheel torque Tw using a predetermined reduction ratio rr. The reduction ratio rr is a fixed value that is decided by the mechanical structure from the virtual transmission to drive wheels. The above-described total reduction ratio R is a value that is obtained by multiplying the reduction ratio rr by the gear ratio r. The MT vehicle model calculates the drive wheel torque Tw from the transmission output torque Tgout and the reduction ratio rr. For example, the drive wheel torque Tw is given as the product of the transmission output torque Tgout and the reduction ratio rr (Tw = Tgout × rr).

The control device 50 converts the drive wheel torque Tw calculated by the MT vehicle model, into a demand motor torque Tm. The demand motor torque Tm is a motor torque that is necessary for realizing the drive wheel torque Tw calculated by the MT vehicle model. In the conversion of the drive wheel torque Tw into the demand motor torque Tm, a reduction ratio from an output shaft of the electric motor 44 to the drive wheels is used. Moreover, in accordance with the demand motor torque Tm, the control device 50 controls the inverter 42, and controls the electric motor 44.

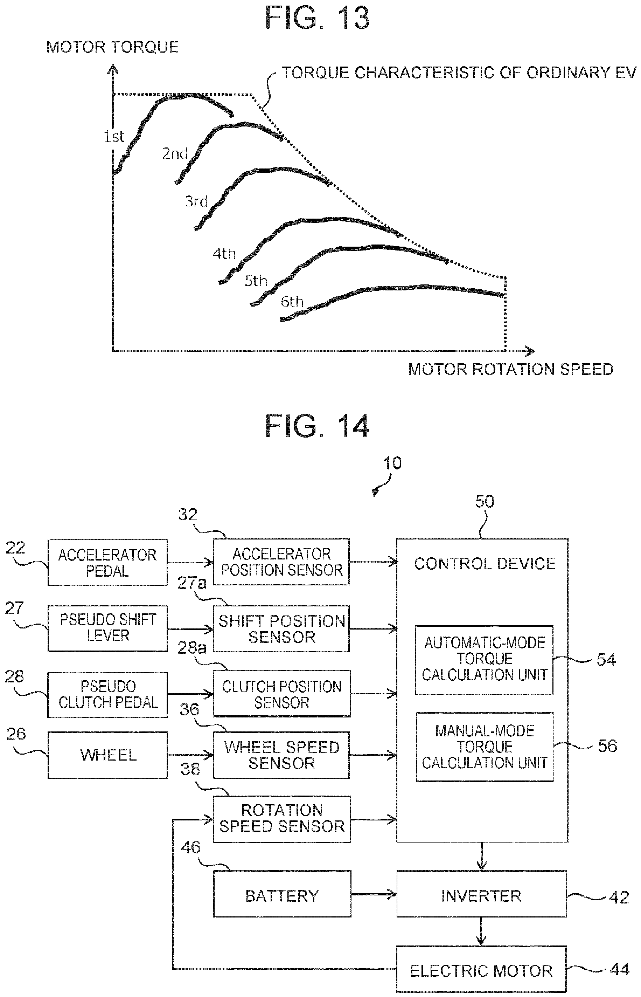

FIG. 13 is a diagram showing a torque characteristic of the electric motor 44 that is realized by the motor control in which the MT vehicle model is used, with the comparison to a torque characteristic of the electric motor 44 that is realized by the ordinary motor control for the battery electric vehicle (EV). As shown in FIG. 13, by the motor control in which the MT vehicle model is used, it is possible to realize a torque characteristic (solid lines in the figure) that simulates the torque characteristic of the MT vehicle, depending on the virtual gear step that is set by the sequential shifter 24. In FIG. 13, the number of gear steps is six.

3.3.2 Second Exemplary Configuration

FIG. 14 is a block diagram showing a second exemplary configuration of the dynamic control system of the battery electric vehicle 10 according to the embodiment. Only constituents different from those in the above-described first exemplary configuration will be described. Specifically, in the second exemplary configuration, the battery electric vehicle 10 includes a pseudo shift lever (pseudo shift device) 27 and a pseudo clutch pedal 28, instead of the sequential shifter 24 included in the first exemplary configuration. The pseudo shift lever 27 and the pseudo clutch pedal 28 are merely dummies that are different from an original shift lever and an original clutch pedal.

The pseudo shift lever 27 has a structure that simulates the shift lever included in the MT vehicle. The disposition and operational feeling of the pseudo shift lever 27 are equivalent to those in the real MT vehicle. For example, the pseudo shift lever 27 is provided with positions corresponding to gear steps: first gear, second gear, third gear, fourth gear, fifth gear, sixth gear, reverse, and neutral. A shift position sensor 27a that detects the gear step by discriminating the position to which the pseudo shift lever 27 is set is provided at the pseudo shift lever 27.

The pseudo clutch pedal 28 has a structure that simulates the clutch pedal included in the MT vehicle. The disposition and operational feeling of the pseudo clutch pedal 28 are equivalent to those in the real MT vehicle. The pseudo clutch pedal 28 is operated when the pseudo shift lever 27 is operated. That is, the driver depresses the pseudo clutch pedal 28 when the driver wants to alter the setting of the gear step using the pseudo shift lever 27, and the driver stops the depression to turn back the pseudo clutch pedal 28 after the alteration of the setting of the gear step. A clutch position sensor 28a for detecting the depression amount of the pseudo clutch pedal 28 is provided at the pseudo clutch pedal 28.

The control device 50 receives signals from the accelerator position sensor 32, the shift position sensor 27a, the clutch position sensor 28a, the wheel speed sensor 36, and the rotation speed sensor 38. The control device 50 processes the signals, and calculates the motor torque command value for the PWM control of the inverter 42.

Similarly to the above-described first exemplary configuration, the control device 50 includes the automatic mode and the manual mode, as the control mode. In the automatic mode, by programs, the output of the electric motor 44 is continuously changed depending on the operation of the accelerator pedal 22. On the other hand, the manual mode is a control mode for driving the battery electric vehicle 10 as if the battery electric vehicle 10 were an MT vehicle. In the manual mode, by programs, the output and output characteristic of the electric motor 44 due to the operation of the accelerator pedal 22 are changed depending on the operation of the pseudo clutch pedal 28 and the pseudo shift lever (pseudo shift device) 27. That is, the manual mode is a control mode in which the output of the electric motor 44 can be changed in response to the driving operation of a vehicle constituent element other than the accelerator pedal 22 or the brake pedal.

A vehicle model included in the manual-mode torque calculation unit 56 is the same as the vehicle model shown in FIG. 9. However, the virtual clutch opening degree Pc is replaced with the depression amount of the pseudo clutch pedal 28 that is detected by the clutch position sensor 28a. Further, the virtual gear step GP is decided by the position of the pseudo shift lever 27 that is detected by the shift position sensor 27a.

**Claims**

1. A sound control system (1) that is applied to a battery electric vehicle (10) that uses an electric motor as a dynamic power device for traveling, the sound control system (1) comprising:

    a speaker (70) that is equipped in the battery electric vehicle (10);
    a sensor (11) that is configured to detect information about a peripheral environment of the battery electric vehicle (10); and
    a processing circuit (110), wherein

    the processing circuit (110) is configured to execute:

    recognizing a target vehicle based on the information detected by the sensor (11), the target vehicle being at least one of other vehicles that travel in a periphery of the battery electric vehicle (10);
    generating an artificial sound related to the target vehicle;
    outputting the artificial sound from the speaker (70); and
    changing a characteristic of the artificial sound depending on a relative speed of the target vehicle with respect to the battery electric vehicle (10).

2. The sound control system (1) according to claim 1, wherein:

    the target vehicle is a vehicle that is configured to travel in front of the battery electric vehicle (10); and
    the processing circuit (110) is configured to change the characteristic of the artificial sound depending on a virtual relative speed, after the battery electric vehicle (10) has passed the target vehicle, a magnitude of a value of the virtual relative speed being larger than a magnitude of a value of the relative speed.

3. The sound control system (1) according to claim 2, wherein:

    the processing circuit (110) is configured to specify a visible range in front of the battery electric vehicle (10), the visible range being a range that is visible from a driver of the battery electric vehicle (10); and
    the processing circuit (110) is configured to determine that the battery electric vehicle (10) has passed the target vehicle, on condition that the target vehicle has gone out of the visible range.

4. The sound control system (1) according to claim 2 or 3, wherein:

the processing circuit (110) is configured to change the characteristic of the artificial sound depending on a relative distance of the target vehicle with respect to the battery electric vehicle (10); and
the processing circuit (110) is configured to change the characteristic of the artificial sound depending on a virtual relative distance, after the battery electric vehicle (10) has passed the target vehicle, a magnitude of a value of the virtual relative distance being larger than a magnitude of a value of the relative distance.

5. The sound control system (1) according to any one of claims 1 to 4, wherein:

the processing circuit (110) is configured to increase a frequency of the artificial sound as a value of the relative speed becomes larger in a direction of approaching the battery electric vehicle (10); and
the processing circuit (110) is configured to decrease the frequency of the artificial sound as the value of the relative speed becomes larger in a direction of receding from the battery electric vehicle (10).

6. The sound control system (1) according to claim 4 taken in combination with any one of claims 1 to 5, wherein the processing circuit (110) is configured to decrease a sound pressure of the artificial sound as the value of the relative distance becomes larger.

7. The sound control system (1) according to any one of claims 1 to 6, wherein the artificial sound includes a pseudo engine sound that simulates an engine sound of an engine vehicle corresponding to classification of the target vehicle.

8. The sound control system (1) according to any one of claims 1 to 6, wherein the artificial sound includes a pseudo wind noise that simulates a wind noise that is generated by traveling of a vehicle corresponding to classification of the target vehicle.

9. The sound control system (1) according to any one of claims 1 to 8, wherein the processing circuit (110) is configured to output, from the speaker (70), a pseudo engine sound that is generated based on operation information about a constituent element of the battery electric vehicle (10).

10. The sound control system (1) according to claim 9, wherein the constituent element includes an accelerator pedal and a sequential shifter.

11. The sound control system (1) according to claim 9, wherein the constituent element includes an accelerator pedal, a pseudo clutch pedal, and a pseudo shift device.

12. The sound control system (1) according to claim 9, wherein the pseudo engine sound is generated so as to simulate an engine sound of a virtual engine vehicle that is selected from a plurality of virtual engine vehicles by a user.

13. A battery electric vehicle (10) configured to use an electric motor as a dynamic power device for traveling, the battery electric vehicle (10) comprising:

a speaker (70);
a sensor (11) configured to detect information about a peripheral environment of the battery electric vehicle (10); and
a processing circuit (110), wherein

the processing circuit (110) is configured to execute:

recognizing a target vehicle based on the information detected by the sensor (11), the target vehicle being at least one of other vehicles that travel in a periphery of the battery electric vehicle (10);
generating an artificial sound related to the target vehicle, to output the artificial sound from the speaker (70); and
changing a characteristic of the artificial sound depending on a relative speed of the target vehicle with respect to the battery electric vehicle (10).

14. The battery electric vehicle (10) according to claim 13, wherein:

the target vehicle is a vehicle that is configured to travel in front of the battery electric vehicle (10); and
the processing circuit (110) is configured to change the characteristic of the artificial sound depending on a virtual relative speed, after the battery electric vehicle (10) has passed the target vehicle, a magnitude of a value of the virtual relative speed being larger than a magnitude of a value of the relative speed.

15. The battery electric vehicle (10) according to claim 13 or 14, wherein the processing circuit (110) is configured to output, from the speaker (70), a pseudo engine sound that is generated based on opera-

**EP 4 675 611 A1**

tion information about a constituent element of the battery electric vehicle (10).

# FIG. 1

1: SOUND CONTROL SYSTEM

# FIG. 2

EP 4 675 611 A1

# FIG. 3A

FREQUENCY MAGNIFICATION

RELATIVE SPEED

RECEDING   APPROACHING

# FIG. 3B

SOUND PRESSURE MAGNIFICATION

RELATIVE DISTANCE

# FIG. 4

# FIG. 5A

40 km/h
20
MOVEMENT DIRECTION

70

AS → P160 →

SP →

50 km/h
10

ACTUAL RELATIVE SPEED: 10 km/h

# FIG. 5B

50 km/h
10

MOVEMENT DIRECTION

70

AS → P160 →

SP →

40 km/h
20

ACTUAL RELATIVE SPEED: 10 km/h

VIRTUAL RELATIVE SPEED: 30 km/h

GENERATION

FIG. 6

FIG. 7A

FIG. 7B

# FIG. 8

```
            ┌──────────────┐
            │    START     │
            └──────┬───────┘
                   │
                   ▼
S100 ◇─────────────────────────────◇
     │   HAS TARGET VEHICLE        │──────────────────────┐
     ◇   BEEN PASSED?              ◇                       │
     └──────────────┬──────────────┘                       │
                    │                                       │
                    ▼                                       ▼
S120 ┌─────────────────────────────┐   S110 ┌─────────────────────────────────┐
     │ GENERATE VIRTUAL RELATIVE   │        │ CHANGE CHARACTERISTIC OF        │
     │ SPEED AND VIRTUAL RELATIVE  │        │ ARTIFICIAL SOUND DEPENDING ON   │
     │ DISTANCE                    │        │ ACTUAL RELATIVE SPEED AND       │
     └──────────────┬──────────────┘        │ ACTUAL RELATIVE DISTANCE        │
                    │                        └──────────────┬──────────────────┘
                    ▼                                       │
S130 ┌─────────────────────────────┐                       │
     │ CHANGE CHARACTERISTIC OF    │                       │
     │ ARTIFICIAL SOUND DEPENDING  │                       │
     │ ON VIRTUAL RELATIVE SPEED   │                       │
     │ AND VIRTUAL RELATIVE DIST.  │                       │
     └──────────────┬──────────────┘                       │
                    │                                       │
                    ▼                                       │
            ┌──────────────┐                                │
            │     END      │◄───────────────────────────────┘
            └──────────────┘
```

# FIG. 9

# FIG. 10

P230

```
SOUND SOURCE DATA
MANAGEMENT UNIT

EVS-A  EVS-B  EVS-C  EVS-D
```

P210

```
DRIVING
INFORMATION
ACQUISITION
UNIT
```

11 →

DRV →

P240

```
ENGINE SOUND
GENERATION UNIT

EVS-B
```

ES →

P260

```
SOUND
OUTPUT
CONTROL
UNIT
```

70

P220

```
HMI
CONTROL
UNIT
```

12 ↔

INI

# FIG. 11

10

50

22 — ACCELERATOR PEDAL

32 ACCELERATOR POSITION SENSOR

CONTROL DEVICE

24 — SEQUENTIAL SHIFTER

34u

34d

AUTOMATIC-MODE TORQUE CALCULATION UNIT — 54

MANUAL-MODE TORQUE CALCULATION UNIT — 56

26 — WHEEL

36 WHEEL SPEED SENSOR

38 ROTATION SPEED SENSOR

46 — BATTERY

INVERTER — 42

ELECTRIC MOTOR — 44

# FIG. 12

# FIG. 13

MOTOR TORQUE

TORQUE CHARACTERISTIC OF ORDINARY EV

1st

2nd

3rd

4th

5th

6th

MOTOR ROTATION SPEED

# FIG. 14

10

| | | | |
|---|---|---|---|
| 22 ACCELERATOR PEDAL | 32 ACCELERATOR POSITION SENSOR | | 50 CONTROL DEVICE |
| 27 PSEUDO SHIFT LEVER | 27a SHIFT POSITION SENSOR | | |
| 28 PSEUDO CLUTCH PEDAL | 28a CLUTCH POSITION SENSOR | | AUTOMATIC-MODE TORQUE CALCULATION UNIT — 54 |
| 26 WHEEL | 36 WHEEL SPEED SENSOR | | MANUAL-MODE TORQUE CALCULATION UNIT — 56 |
| | 38 ROTATION SPEED SENSOR | | |
| | 46 BATTERY | INVERTER — 42 | |
| | | ELECTRIC MOTOR — 44 | |

EP 4 675 611 A1

Europäisches Patentamt
European Patent Office
Office européen des brevets

# EUROPEAN SEARCH REPORT

Application Number

EP 25 15 8375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/175959 A1 (CARDINAUX FABIEN [DE] ET AL) 4 June 2020 (2020-06-04) | 1,7-13, 15 | INV. G10K15/02 B60Q5/00 G08G1/16 |
| A | * paragraphs [0056], [0057], [0069], [0071]; figures 7, 8 * | 2-6,14 | |
| | ----- | | |
| X | KR 2020 0145053 A (HYUNDAI MOTOR CO LTD [KR]; KIA MOTORS CORP [KR]) 30 December 2020 (2020-12-30) | 1,7-13, 15 | ADD. G07C5/02 |
| A | * paragraphs [0008] - [0010], [0012], [0018] - [0023], [0045], [0048], [0077] * | 2-6,14 | |
| | ----- | | |

TECHNICAL FIELDS SEARCHED (IPC)

G10K
B60Q
G08G
G07C

The present search report has been drawn up for all claims

| Place of search | Date of completion of the search | Examiner |
|---|---|---|
| The Hague | 21 November 2025 | Naujoks, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

## ANNEX TO THE EUROPEAN SEARCH REPORT
## ON EUROPEAN PATENT APPLICATION NO.

EP 25 15 8375

This annex lists the patent family members relating to the patent documents cited in  the above-mentioned European search report.
The members are as contained in the European Patent Office EDP file on
The European Patent Office is in no way liable for these particulars which are merely given for the purpose of information.

21-11-2025

| Patent document cited in search report | Publication date | Patent family member(s) | Publication date |
|---|---|---|---|
| US 2020175959 A1 | 04-06-2020 | EP 3652731 A1<br>US 2020175959 A1<br>WO 2019012017 A1 | 20-05-2020<br>04-06-2020<br>17-01-2019 |
| KR 20200145053 A | 30-12-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215437 A